# EUROPEAN PATENT APPLICATION

(11) **EP 4 559 764 A1**
(43) Date of publication of application: **28.05.2025**
(21) Application number: 23842913.8
(22) Date of filing: 13.07.2023
(51) Int. Cl.: B60S 3/04

(54) **VEHICLE DEPOSIT REMOVAL DEVICE**

(30) Priority: 19.07.2022 JP 2022114564
(71) Applicant: Tokusa, Shigeo, Amagasaki-shi, Hyogo 661-0012 (JP)
(72) Inventor: TOKUSA Shigeo, Amagasaki-shi, Hyogo 661-0012 (JP)
(74) Representative: Vossius & Partner Patentanwälte Rechtsanwälte mbB
(86) International application number: PCT/JP2023/025901
(87) International publication number: WO 2024/018990

(57) **Abstract**

Deterioration in washing ability over a long period of time in a vehicle deposit removal device that increases a pressure of a washing liquid by pump means operated by a weight of a vehicle and injects the washing liquid toward the vehicle. Pump means P includes an operating chamber A that accommodates a washing liquid W. A movable upper wall portion 5 of the operating chamber A has a base end portion 5A and a free end portion 5B, the base end portion is supported by a spindle J in a left-right direction, and the free end portion 5B swings in an up-down direction as a tire T of the vehicle passes. A sealing body S is provided between a fixed wall portion C defining the operating chamber A and the movable upper wall portion 5. The sealing body S is supported by a support portion E provided on the movable upper wall portion 5 to be movable forward and backward with respect to the fixed wall portion C. The sealing body S advances toward the fixed wall portion C and slides on a wall surface D of the fixed wall portion C by a pressurizing force of the washing liquid W in the operating chamber A when the movable upper wall portion 5 swings downward to decrease a volume of the operating chamber A.

## Description

### TECHNICAL FIELD

The present invention relates to a vehicle deposit removal device.

### BACKGROUND ART

As a vehicle deposit removal device that washes tires of a vehicle, mud, or the like attached to a lower portion of a vehicle body at a construction site before the vehicle exits onto a public road from the construction site, there is a deposit removal device that increases a pressure of a washing liquid by pump means operated by a weight of the vehicle and injects the washing liquid toward the vehicle when the vehicle passes through a washing tank formed at a position where a ground is dug down (see, for example, Patent Literatures (PTLs) 1 and 2).

A pump means 11 operated by the weight of the vehicle in the vehicle deposit removal device of PTL 1 is a positive displacement type, has an operating chamber 17 that accommodates a washing liquid, and includes a footboard 16, an operating chamber forming member 18, biasing means 19, a check valve 20, and the like. In an embodiment of the vehicle deposit removal device of PTL 1, 10 pairs of left and right pump means 11 are aligned in a front-rear direction, and a total of 20 pump means 11 are provided (FIGS. 1 and 2 of PTL 1).

A rear end portion of the footboard 16 is pivotably supported by a pivotable spindle 13 in a left-right direction, and the footboard 16 is pivotable between an inclined initial posture rising forward and a substantially horizontal injection completion posture, and has outer peripheral surface washing injection holes 14 and side surface washing injection holes 15. The operating chamber forming member 18 forms the operating chamber 17 below the footboard 16. The biasing means 19 constantly biases the footboard 16 to the initial posture. The check valve 20 allows the inflow of the washing liquid from a washing tank 2 to the operating chamber 17 and prevents the outflow of the washing liquid from the operating chamber 17 to the washing tank 2.

Each of the outer peripheral surface washing injection holes 14 penetrates the footboard 16 in a substantially orthogonal direction, and is provided on the front, rear, left, and right of the footboard 16. Each of the side surface washing injection holes 15 penetrates the footboard 16 in an inclined manner to face inward in the left-right direction, and is provided at an end portion of the footboard 16 in the left-right direction. While a tire T of the vehicle rides on the footboard 16 of the pump means 11 and a volume of the operating chamber 17 decreases until the footboard 16 reaches the injection completion posture from the initial posture, the washing liquid in the operating chamber 17 is pressurized to apply pressure energy. This causes the washing liquid to be injected from the outer peripheral surface washing injection holes 14 and the side surface washing injection holes 15 toward the tire T (washing liquid injection structure of PTL 1), thereby washing the tire T.

The operating chamber forming member 18 includes a pair of front and rear operating chamber forming plates 35. A closing rod 40 made of a metal rod extending in the left-right direction is fixed to an upper end portion of a front surface of the front operating chamber forming plate 35 over the entire length. A rear surface of an arc-shaped front closing plate 41 fixed to a front end portion of the footboard 16 rotating about the pivotable spindle 13 slides on a front end portion of the closing rod 40 (washing liquid leakage prevention structure of PTL 1), thereby preventing the washing liquid from leaking from between the front closing plate 41 and the closing rod 40.

A pump means 17 operated by the weight of the vehicle in the vehicle deposit removal device of PTL 2 is a positive displacement type, has an operating chamber 25 that accommodates a washing liquid, and includes a footboard 23, a projection portion 49, a winding spring 27, injection holes 13d, injection pipes 29, a check valve 31, and the like. In an embodiment of the vehicle deposit removal device of PTL 2, 11 pairs of left and right pump means 17 are aligned in a front-rear direction, and a total of 22 pump means 17 are provided (FIGS. 1 and 2 of PTL 2).

A front end portion of the footboard 23 is pivotably supported by a pivotable spindle 21 in a left-right direction, and the footboard 23 is pivotable between an initial posture as a substantially horizontal initial state and an inclined pressurizing posture rising forward. The projection portion 49 is one metal rod fixed to an upper surface of a front portion of the footboard 23 and extending in the left-right direction. The winding spring 27 is a biasing member that biases the footboard 23 upward. The washing liquid is injected through injection holes 13d and the injection pipes 29 toward the vehicle. The check valve 31 allows the inflow of the washing liquid from the washing tank 2 to the operating chamber 25 and prevents the outflow of the washing liquid from the operating chamber 25 to the washing tank 2.

The injection holes 13d are provided in a rear portion of an upper flange portion 13b of a second frame member 13 separate from the footboard 23 and positioned in front of and behind the footboard 23 to be aligned in the left-right direction. The injection pipes 29 are tubular members separate from the footboard 23 and provided on top plate portions 45 of left and right side walls 43, and are bent so that inlet ends are positioned in the operating chamber 25 and end portions on outlet sides are inclined upward toward an inside in the left-right direction above the top plate portions 45 after extending upward from the inlet ends. While a tire T of the vehicle rides on the projection portion 49 provided in a front portion of the footboard 23 of the pump means 17 and a volume of the operating chamber 25 decreases until the footboard 16 changes from the initial posture to the pressurized posture, the washing liquid in the operating chamber 25 is pressurized to apply pressure energy. This causes the washing liquid to be injected from the injection holes 13d and the injection pipes 29 toward the tire T (washing liquid injection structure of PTL 2), thereby washing the tire T.

A rectangular plate-shaped flexible member 53 is fixed to a lower surface of the footboard 23. A rear end portion of the flexible member 53 protruding rearward from a rear end portion of the footboard 23 slides on a rear wall 41 that serves as a wall surface of the operating chamber 25 and constitutes a rear wall surface of the pump means 17 (washing liquid leakage prevention structure of PTL 2), thereby preventing the washing liquid from leaking from between the flexible member 5 and the rear wall 41.

### CITATIONS LIST

### PATENT LITERATURE

PTL 1: Japanese Patent No. 5741750
PTL 2: Japanese Patent No. 6342055

### SUMMARY OF INVENTION

### TECHNICAL PROBLEMS

Since the pump means in the vehicle deposit removal devices of the related arts described in PTLs 1 and 2 are operated by the weight of the vehicle, it is not necessary to provide a drive device such as an electric motor for driving the pump means, and electric power or compressed air which is a power source of the drive device. Accordingly, the vehicle deposit removal device has an advantage in energy saving and reduction in manufacturing cost and running cost.

In addition, since the vehicle deposit removal devices of the related arts include a large number of pump means (for example, 20 in the embodiment of PTL 1 and 22 in the embodiment of PTL 2), a washing function is not lost even though a part of the pump means loses its function due to a washing function dispersion effect at the time of failure in combination with a small number of failures.

However, in the vehicle deposit removal device of the related art, the washing liquid leakage prevention structure of PTL 1 or the washing liquid leakage prevention structure of PTL 2 is adopted in order to prevent the leakage of the washing liquid from the operating chamber when the volume of the operating chamber of the positive displacement pump means decreases. These washing liquid leakage prevention structures include sliding parts, and wear of the parts progresses due to long-term use. When the part is continuously used in a state where the wear of the part progresses, and when the washing liquid in the operating chamber is pressurized by the weight of the vehicle, the washing liquid leaks from a place of the worn part.

If the washing liquid leaks from the worn part, the pressure of the washing liquid injected in the washing liquid injection structure of PTL 1 or the washing liquid injection structure of PTL 2 is reduced, and washing ability is greatly deteriorated. Accordingly, the vehicle deposit removal device of the related art has the above-described advantage, but there is room for improvement from the viewpoint of preventing deterioration in washing ability over a long period of time.

In the washing liquid injection structure of PTL 1, a distance between the outer peripheral surface washing injection holes 14 penetrating the footboard 16 and an outer peripheral surface of the tire T riding on the footboard 16 is short. This narrows a washing treatment range of the outer peripheral surface of the tire T that can be washed with the washing liquid injected from the outer peripheral surface washing injection holes 14. Accordingly, there is room for improvement from the viewpoint of improving the washing ability.

In the washing liquid injection structure of PTL 2, the injection holes 13d are provided in the second frame member 13 separate from the footboard 23. Accordingly, an injection direction of the washing liquid injected from the injection holes 13d with respect to the tire T that rides on the projection portion 49 and advances does not change, and thus the washing treatment range is limited. Accordingly, there is room for improvement from the viewpoint of improving the washing ability.

An object of the present invention is to prevent deterioration in washing ability over a long period of time and to improve the washing ability in a vehicle deposit removal device that increases a pressure of a washing liquid by pump means operated by a weight of a vehicle and injects the washing liquid toward the vehicle.

### SOLUTIONS TO PROBLEMS

A vehicle deposit removal device according to a first aspect of the present invention is a vehicle deposit removal device including positive displacement pump means operated by a weight of a vehicle. The pump means includes an operating chamber that accommodates a washing liquid, and the operating chamber includes a movable upper wall portion that has a base end portion and a free end portion. The base end portion is supported by a spindle in a left-right direction, and the free end portion swings in an up-down direction as the vehicle passes. The pump means includes a sealing body between a fixed wall portion defining the operating chamber and the movable upper wall portion, and the sealing body is supported by a support portion provided on the movable upper wall portion to be movable forward or backward with respect to the fixed wall portion. The movable upper wall portion moves forward to the fixed wall portion and slides on a wall surface of the fixed wall portion by a pressurizing force of the washing liquid in the operating chamber at a time when the movable upper wall portion swings downward to decrease a volume of the operating chamber, and the movable upper wall portion moves backward to be separated from the wall surface by a negative pressure of the washing liquid in the operating chamber at a time when the movable upper wall portion swings upward to increase the volume of the operating chamber.

In the vehicle deposit removal device according to the first aspect of the present invention, the sealing body provided on the movable upper wall portion forming the operating chamber that accommodates the washing liquid can move forward and backward with respect to the fixed wall portion forming the operating chamber. When the vehicle passes, the movable upper wall portion swings downward to pressurize the washing liquid in the operating chamber, causing the sealing body to advance toward the fixed wall portion and slides on the wall surface of the fixed wall portion by the pressurizing force of the washing liquid. That is, even though a distal end portion of the sealing body wears due to long-term use, a state where the sealing body certainly advances toward the fixed wall portion by the pressurizing force of the washing liquid to come into contact with the wall surface of the fixed wall portion is maintained when the washing liquid in the operating chamber is pressurized. In this state, the distal end portion of the sealing body slides on the fixed wall portion. Accordingly, even though the sealing body is used for a long period of time, a sealing function of the sealing body does not deteriorate, and leakage of the washing liquid from between the distal end portion of the sealing body and the wall surface of the fixed wall portion can be prevented. Thus, deterioration in washing ability can be prevented over a long period of time.

In addition, in the vehicle deposit removal device according to the first aspect of the present invention, when the movable upper wall portion swings upward to increase the volume of the operating chamber, the sealing body moves backward to be separated from the wall surface of the fixed wall portion by the negative pressure of the washing liquid in the operating chamber. Accordingly, when the movable upper wall portion swings upward, the sealing body is not worn. Furthermore, when the movable upper wall portion swings upward to increase the volume of the operating chamber, the washing liquid also flows into the operating chamber through a gap formed between the wall surface of the fixed wall portion and the sealing body. Accordingly, a time for filling the operating chamber with washing water is shortened.

In a vehicle deposit removal device according to a second aspect of the present invention, in the vehicle deposit removal device according to the first aspect, the sealing body is a sealing plate having a rectangular plate shape, the support portion includes a horizontal support plate parallel to a bottom surface of the movable upper wall portion, the horizontal support plate supporting the sealing plate between the horizontal support plate and the movable upper wall portion, and a vertical support plate positioned on an opposite side of the fixed wall portion with respect to the sealing plate. The vertical support plate has a through-hole extending toward an end face of the sealing plate.

In the vehicle deposit removal device according to the second aspect of the present invention, the support portion that supports the rectangular plate-shaped sealing plate to be movable forward and backward with respect to the fixed wall portion includes the horizontal support plate and the vertical support plate, and the pressure of the washing liquid in the operating chamber acts on the sealing plate from the through-hole that is provided in the vertical support plate and is communicatively connected with the operating chamber that accommodates the washing liquid. Accordingly, a structure for causing the sealing plate to move forward and backward with the washing liquid in the operating chamber is simplified.

In a vehicle deposit removal device according to a third aspect of the present invention, in the vehicle deposit removal device according to the first aspect or the vehicle deposit removal device according to the second aspect, the movable upper wall portion swings about the spindle between an initial posture in which the movable upper wall portion is substantially horizontal and an injection completion posture in which the free end portion swings most downward, and a tire riding body and a washing liquid injection body, which are positioned above the movable upper wall portion and swing integrally with the movable upper wall portion are provided. The tire riding body causes the movable upper wall portion to swing downward by a tire of the vehicle riding on the tire riding body. The washing liquid injection body has a through-hole communicatively connected with the operating chamber, and an injection hole at a position separated by 30 mm or more in a radial direction of the tire from an outer peripheral surface of the tire riding on the tire riding body.

In the vehicle deposit removal device according to the third aspect of the present invention, the injection hole is provided in the washing liquid injection body that swings integrally with the movable upper wall portion swinging with the base end portion supported by the spindle, and the injection hole is at a position separated by 30 mm or more in the radial direction of the tire from the outer peripheral surface of the tire riding on the tire riding body. Accordingly, the washing treatment range of the outer peripheral surface of the tire, which can be washed with the washing liquid injected from the injection hole, is increased, thereby improving the washing ability.

In a vehicle deposit removal device according to a fourth aspect of the present invention, in the vehicle deposit removal device according to the third aspect, the washing liquid injection body has, in the initial posture, an upper injection hole in a substantially vertical direction, a front inclined injection hole angled forward from the vertical direction, and a rear inclined injection hole angled rearward from the vertical direction, which are in a plane including the front-rear direction and the up-down direction.

In the vehicle deposit removal device according to a fourth aspect of the present invention, the washing liquid injection body includes the upper injection hole, the front inclination injection hole, and the rear inclination injection hole in the initial posture in which the movable upper wall portion is substantially horizontal. Accordingly, the washing treatment range of the outer peripheral surface of the tire, which can be washed with the washing liquid injected from the injection hole, is further increased, thereby further improving the washing ability.

In a vehicle deposit removal device according to a fifth aspect of the present invention, in the vehicle deposit removal device according to the third aspect, the tire riding body has a substantially arc-shaped upper surface that protrudes upward as viewed in the left-right direction in the initial posture, and a projection portion that protrudes in a substantially horizontal direction, on a surface of the upper surface in a side close to a free end portion of the movable upper wall portion. The vehicle passes through the pump means from both front and rear directions, and when the vehicle passes in a direction approaching the tire riding body from a side thereof where the projection portion is provided, the tire of the vehicle rides on an upper surface of the projection portion and causes the movable upper wall portion to swing downward before riding on the tire riding body.

In the vehicle deposit removal device according to the fifth aspect of the present invention, in the initial posture in which the movable upper wall portion is substantially horizontal, the projection portion protruding in the substantially horizontal direction is provided on the surface of the movable upper wall portion on the free end portion side of the upper surface of the movable upper wall portion having a substantially arc shape protruding above the tire riding body. When a vehicle passes in a direction approaching a tire riding body from a side where the projection portion is provided, the tire of the vehicle runs on the projection portion and swings the movable upper wall portion downward before running on the tire riding body. The projection portion is provided, and thus an elevation angle of the position where the tire abuts as viewed in the spindle is significantly smaller than in a case where the projection portion is not provided. As a result, a very large lateral load does not act on the spindle as in a case where the projection portion is not provided.

As a result, the vehicle can pass through the vehicle deposit removal device while advancing forward in both directions (reciprocating direction) of a direction in which the vehicle approaches the tire riding body from a side having no projection portion with respect to the tire riding body (direction from the base end portion to the free end portion of the movable upper wall portion in the initial posture) and a direction in which the vehicle approaches the tire riding body from a side having the projection portion with respect to the tire riding body (direction from the free end portion to the distal end portion of the movable upper wall portion in the initial posture). Accordingly, the vehicle deposit removal device can be installed and utilized in a place having a narrow entrance, such as a passage from a road to a construction site.

### ADVANTAGEOUS EFFECTS OF INVENTION

In accordance with the vehicle deposit removal device of the present invention, even though the distal end portion of the sealing body is worn due to long-term use, the sealing body provided on the movable upper wall portion, which can move forward and backward with respect to the fixed wall portion, advances toward the fixed wall portion by the washing liquid in the operating chamber pressurized by the movable upper wall portion swinging downward when the vehicle passes. With this configuration, a state where the distal end portion of the sealing body comes into contact with the wall surface of the fixed wall portion is maintained, and in this state, the distal end portion of the sealing body slides on the fixed wall portion. Accordingly, even though the sealing body is used for a long period of time, the sealing function of the sealing body does not deteriorate, and the leakage of the washing liquid from between the distal end portion of the sealing body and the wall surface of the fixed wall portion can be prevented. Thus, the deterioration in washing ability can be prevented over a long period of time.

In addition, in the vehicle deposit removal device, the movable upper wall portion swings about the spindle between the initial posture in which the movable upper wall portion is substantially horizontal and the injection completion posture in which the free end portion of the movable upper wall portion swings most downward, the tire riding body and the washing liquid injection body that are positioned above the movable upper wall portion and swing integrally with the movable upper wall portion are provided, the tire riding body causes the movable upper wall portion to swing downward by the tire of the vehicle riding on the tire riding body, and the washing liquid injection body has the through-hole communicatively connected with the operating chamber, the washing liquid injection body having the injection hole at the position separated by 30 mm or more in the radial direction of the tire from the outer peripheral surface of the tire riding on the tire riding body. In such a vehicle deposit removal device, the washing treatment range of the outer peripheral surface of the tire, which can be washed with the washing liquid injected from the injection hole, is increased, thereby improving the washing ability.

### BRIEF DESCRIPTION OF DRAWINGS

FIG. 1 is a plan view of a tire washing device that is a vehicle deposit removal device according to an embodiment of the present invention.
FIG. 2 is a longitudinal sectional right side view of the tire washing device.
FIG. 3 is a perspective view of the tire washing device with a partially sectional view.
FIG. 4 is a perspective view of a right pump unit as pump means.
FIG. 5 is an exploded perspective view of the right pump unit.
FIG. 6 is a longitudinal sectional right side view of enlarged main parts for describing an operation of the pump means, and illustrates an initial posture in which a movable upper wall portion is substantially horizontal.
FIG. 7 is a longitudinal sectional right side view of enlarged main parts for describing the operation of the pump means, and illustrates a state where the movable upper wall portion swings downward.
FIG. 8 is a longitudinal sectional right side view of enlarged main parts for describing the operation of the pump means, and illustrates a state where the movable upper wall portion swings further downward from the state of FIG. 7.
FIG. 9 is a plan view with a partially transverse sectional view and a sectional view of enlarged main parts of the pump means.
FIG. 10 is a longitudinal sectional right side view of enlarged main parts for describing the operation of the pump means, and illustrates an injection completion posture in which a free end portion of the movable upper wall portion swings downward the most.
FIG. 11 is a longitudinal sectional right side view of enlarged main parts for describing the operation of the pump means, and illustrates a state where the movable upper wall portion is returning to the initial posture by a return spring.
FIG. 12 is a schematic front view of a longitudinal sectional view of a side washing liquid injection body for describing an operation thereof.
FIG. 13 is a longitudinal sectional right side view of enlarged main parts illustrating a case where a vehicle enters the tire washing device in a reverse direction.

### DESCRIPTION OF EMBODIMENTS

Hereinafter, an embodiment according to the present invention will be described with reference to the drawings. A vehicle deposit removal device according to the embodiment of the present invention is a tire washing device 1 that washes and removes mud and the like from tires of a vehicle.

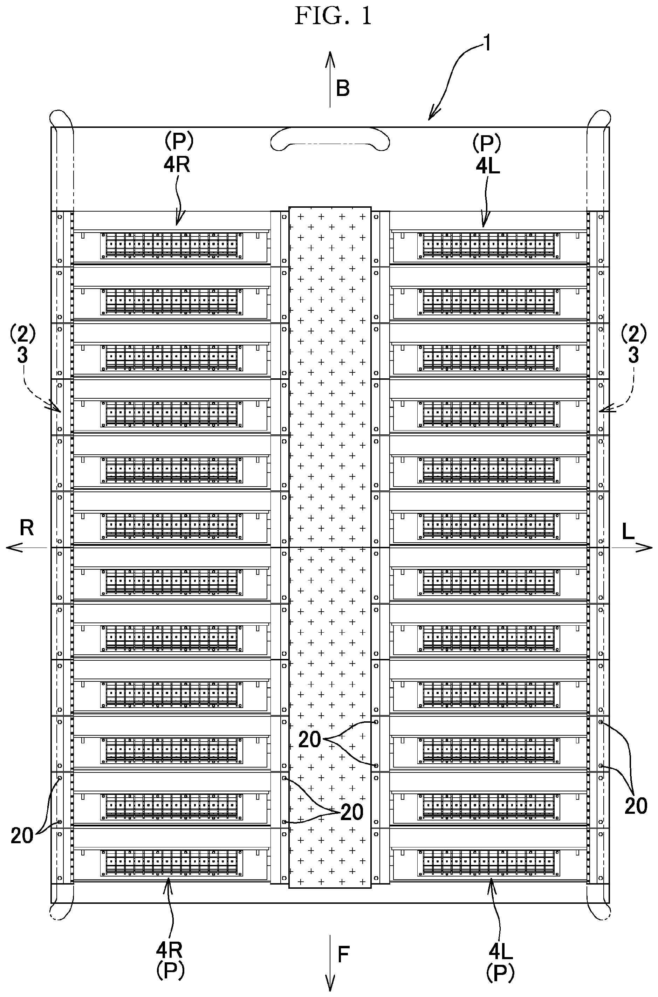

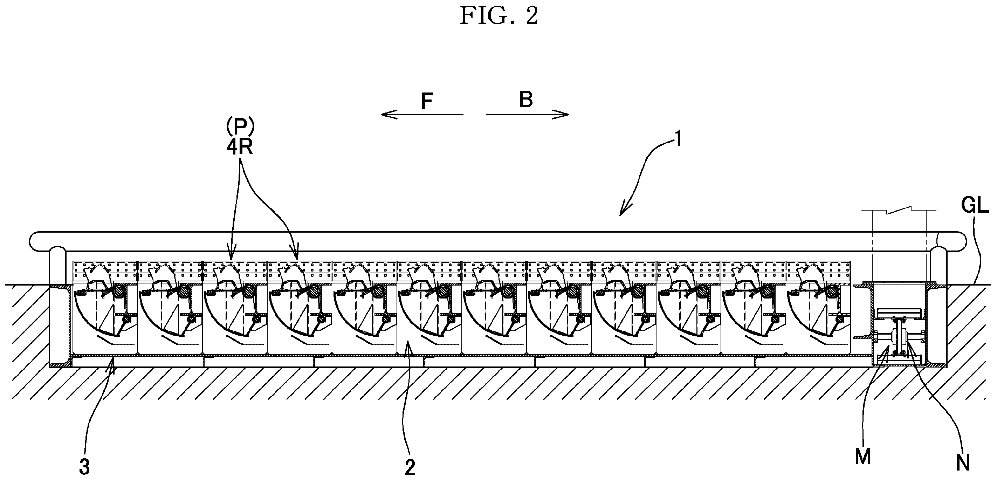

In the tire washing device 1, a direction of an arrow F in FIGS. 1 and 2 is referred to as "front", and an opposite direction is referred to as "rear" (see an arrow B in FIGS. 1 and 2). With respect to the front, "left" (see an arrow L in FIG. 1) and "right" (see an arrow R in FIG. 1) are defined. A diagram of the tire washing device 1 viewed from the front is a front view.

### <Tire Washing Device>

A vehicle passes through the tire washing device 1 illustrated in a plan view in FIG. 1 and a right side view with a longitudinal sectional view in FIG. 2 at a speed of, for example, about 4 to 5 km/h, and thus, the tires and the like of the vehicle are washed. The vehicle enters the tire washing device 1 and advances to a front side of the tire washing device 1 (direction of the arrow F) or advances to a rear side of the tire washing device 1 (direction of the arrow B). The tire washing device 1 of the present embodiment allows the vehicle to pass in a reciprocating direction on the same tire washing device 1, the tire washing device 1 can be suitably installed in a passage from a road to a construction site, for example.

As illustrated in FIGS. 1 and 2, the tire washing device 1 includes left and right washing tanks 2 formed by left and right body frames 3 installed at a position where a ground GL at an installation place is dug down, and a plurality of positive displacement pump means P operated by a weight of the vehicle. In the present embodiment, 12 left pump units 4L as pump means P are provided on the left body frame 3, and 12 right pump units 4R as pump means P are provided on the right body frame 3 side by side in a front-rear direction.

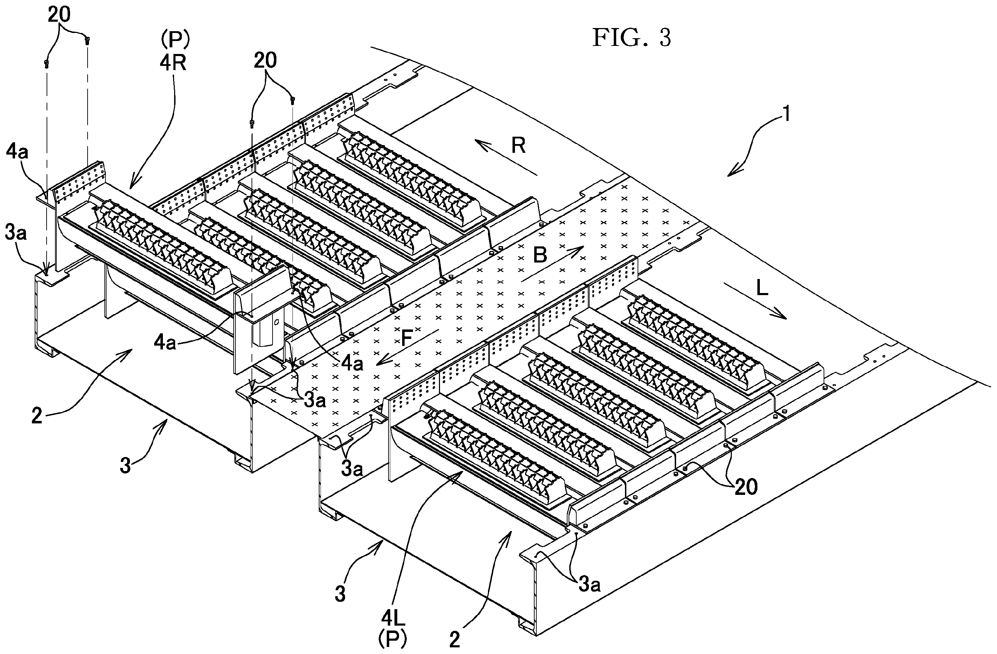

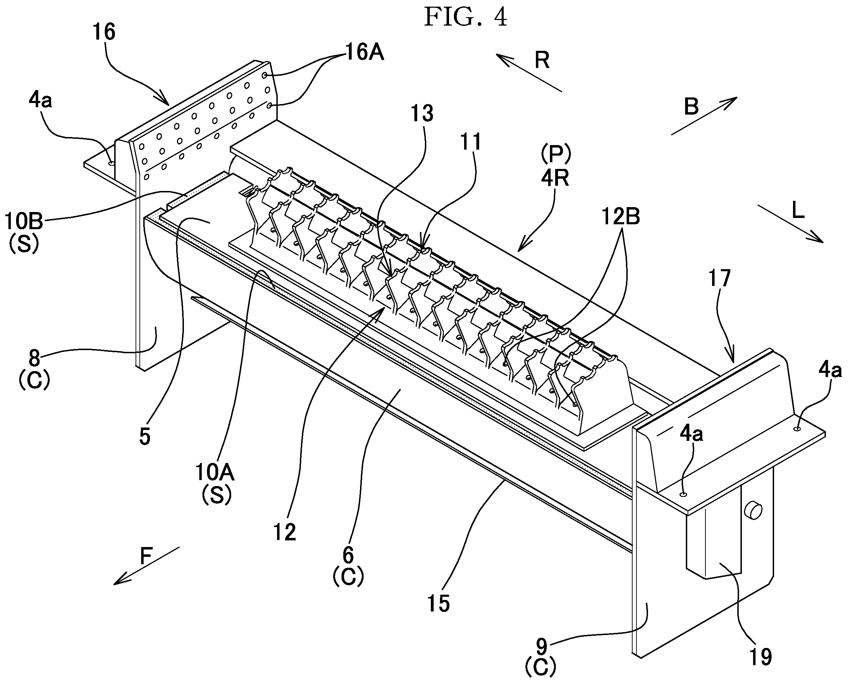

As illustrated in a perspective view with a partial sectional view in FIG. 3 and a perspective view in FIG. 4, each pump means P is unitized. Accordingly, each pump means P can be easily attached to the body frame 3 by inserting bolts 20 into attachment holes 4a positioned at left and right end portions of the pump means P and screwing the bolts 20 into screw holes 3a positioned at left and right end portions of the body frame 3. In a state where the pump means P is attached to the body frame 3, positioning of the pump means P in the front-rear direction and a left-right direction with respect to the body frame 3 is completed.

Since each pump means P is unitized, a replacement work of the pump means P is also easy. Specifically, when one pump means P is replaced, after the pump means P is removed by loosening the bolts 20, a new pump means P can be attached to this place by using the bolts 20.

### <Washing liquid in Washing Tank>

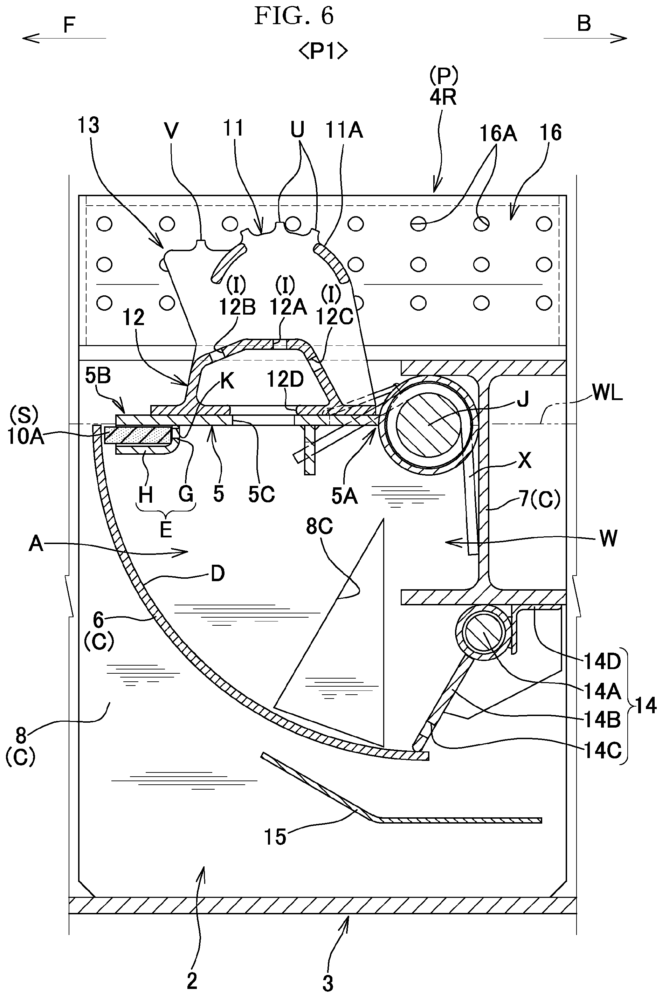

For example, a liquid level WL of a washing liquid W in the washing tank 2 illustrated in longitudinal sectional right side views of enlarged main parts in FIGS. 6 to 8 and FIGS. 10 and 11 is set to be below a lower end portion of a tire T of the vehicle when the vehicle passes through the washing tank 2, and the liquid level WL is preferably constant at all times. Here, the washing liquid W in the washing tank 2 scatters to an outside of the washing tank 2 at the time of washing the tire T or adheres to the tire T to be taken out to the outside of the washing tank 2. Thus, the washing liquid W gradually decreases as the number of times of washing increases. In view of this, it is preferable to provide, for example, a float valve or the like so that the liquid level WL of the washing liquid W is appropriately set at all times for supplying a necessary amount of the washing liquid W into the washing tank 2. In addition, it is also preferable to provide a purification tank that purifies a surplus washing liquid W, in order to prevent the washing liquid W in the washing tank 2 from overflowing and contaminating a surrounding environment at the time of rainfall.

Tap water can be suitably used as the washing liquid W to be filled in the washing tank 2. In addition, water such as rivers, lakes and marshes, and reservoirs can also be used. It is also preferable to add a detergent to such water or use a disinfectant solution for disinfecting an avian influenza virus or the like instead of such water.

### <Pump Means>

### (Operating Chamber)

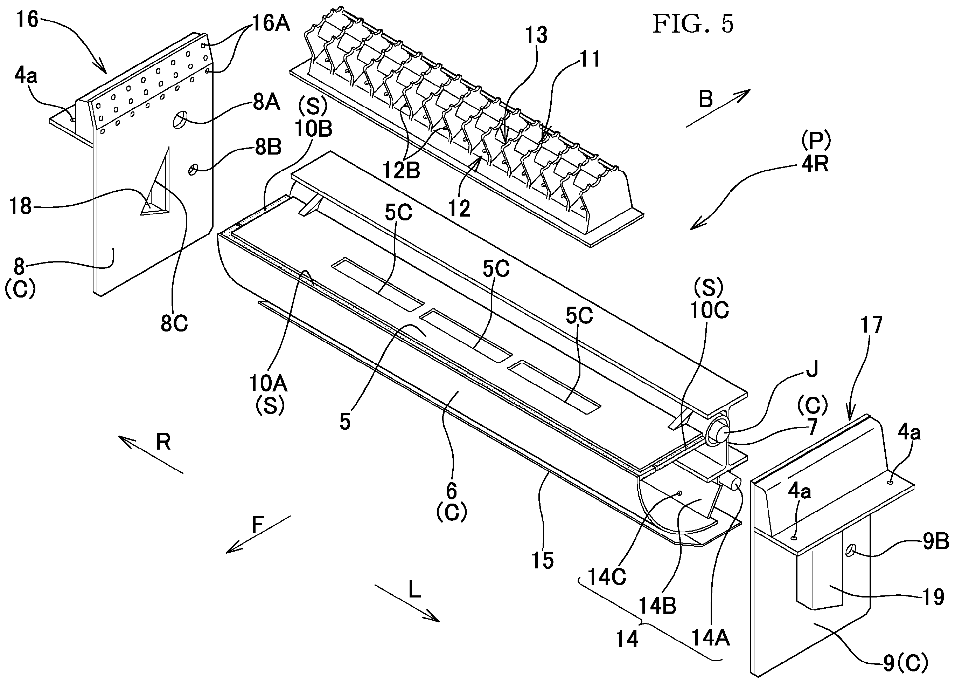

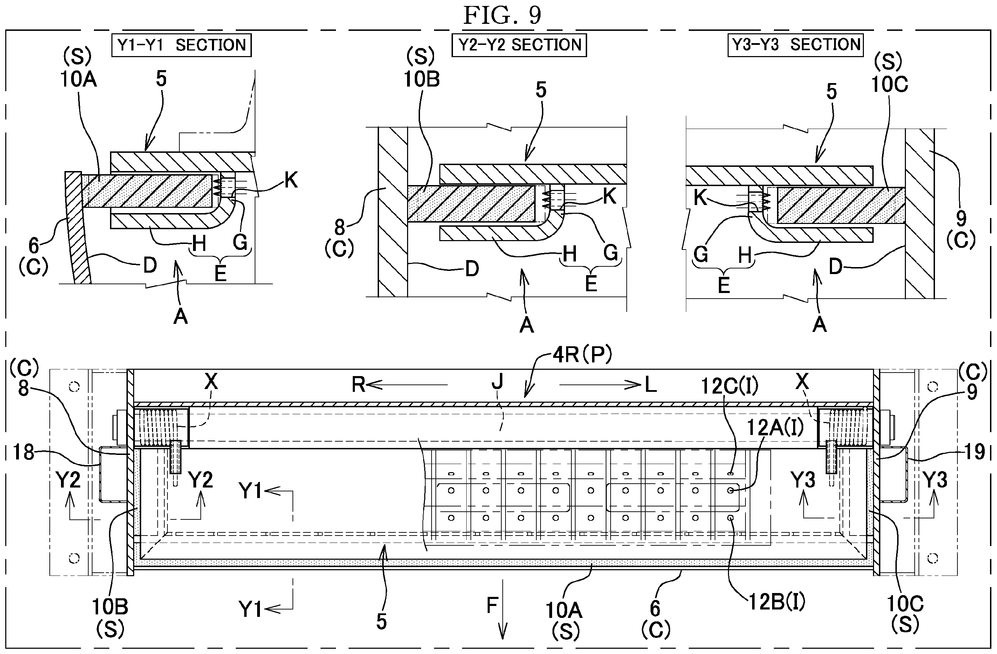

As illustrated in an exploded perspective view in FIG. 5, longitudinal sectional right side views of enlarged main parts in FIGS. 6 to 8, and a plan view with a partially transverse sectional view and a sectional view of enlarged main parts in FIG. 9, the pump means P has an operating chamber A for accommodating the washing liquid W. The operating chamber A includes a movable upper wall portion 5, a front wall 6, a rear wall 7, side walls 8 and 9, a check valve 14, and the like. The movable upper wall portion 5 is swingable in an up-down direction about a spindle J extending in the left-right direction. The front wall 6, the rear wall 7, and the side walls 8 and 9 are fixed wall portions C. The front wall 6 has an arc shape as viewed in the left-right direction, and a wall surface D, that is a rear surface of the front wall 6, is along a distal end of the movable upper wall portion 5 that swings about the spindle J in the left-right direction.

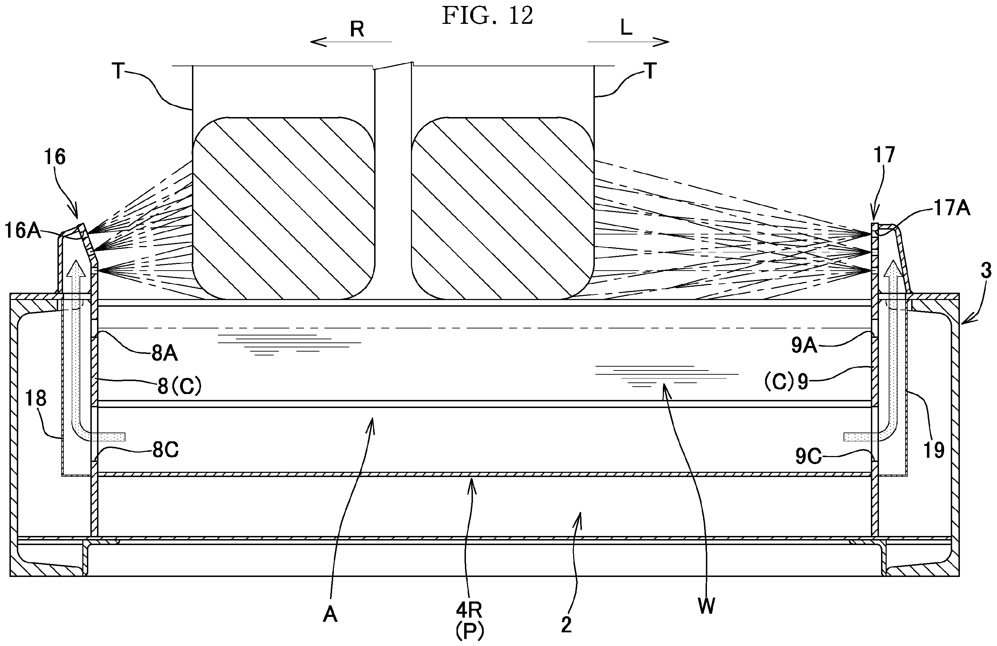

The movable upper wall portion 5 has a base end portion 5A and a free end portion 5B. The base end portion 5A is supported by the spindle J in the left-right direction, and the free end portion 5B swings in the up-down direction as the vehicle passes. Both end portions of the spindle J in the left-right direction are respectively fixed to the side walls 8 and 9 in a state of being inserted through a through-hole 8A of the side wall 8 and a through-hole 9A of the side wall 9 illustrated in the exploded perspective view in FIG. 5 and a schematic front view of a longitudinal sectional view in FIG. 12.

### (Return Spring)

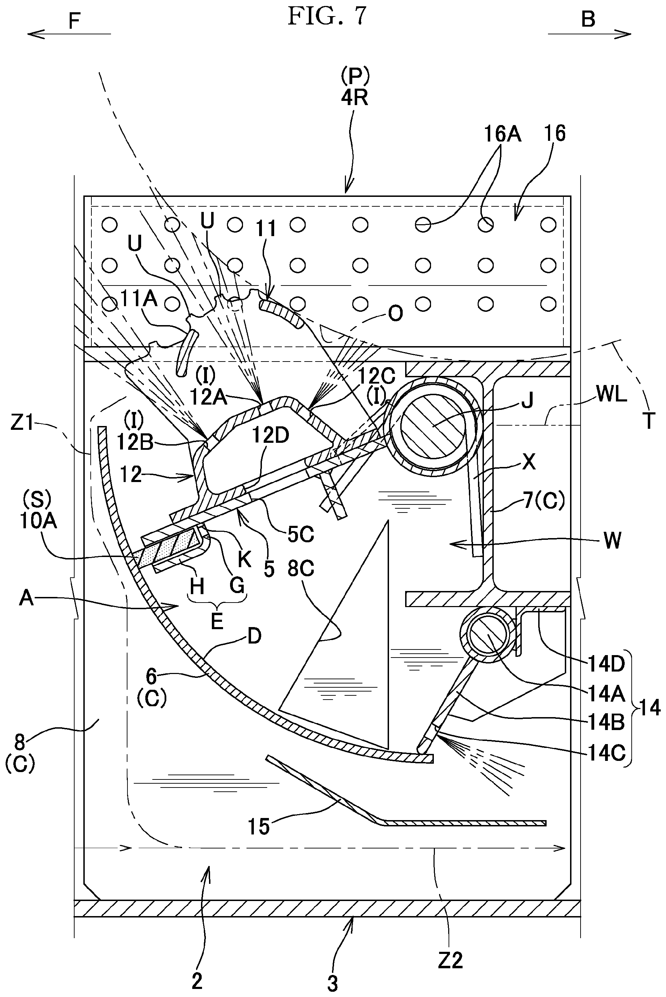

As illustrated in the longitudinal sectional right side views of the enlarged main parts in FIGS. 6 to 8 and the plan view with partially transverse sectional view in FIG. 9, the pump means P includes torsion coil springs X as return springs at both end portions of the spindle J in the left-right direction. The torsion coil spring X biases the movable upper wall portion 5 upward. In a state of an initial posture P1 illustrated in FIG. 6, the movable upper wall portion 5 becomes substantially horizontal by a biasing force of the torsion coil spring X. As illustrated in FIG. 7, when the movable upper wall portion 5 swings downward by the tire T of the vehicle, the movable upper wall portion 5 swings while elastically deforming the torsion coil spring X against the biasing force of the torsion coil spring X.

### (Sealing Body)

As illustrated in the perspective view in FIG. 4, the exploded perspective view in FIG. 5, and the plan view with the partially transverse sectional view and the sectional view of the enlarged main parts in FIG. 9, the pump means P has sealing bodies S between the fixed wall portions C and the movable upper wall portion 5, which form the operating chamber A. The sealing body S is supported by a support portion E provided on the movable upper wall portion 5 to be movable forward and backward with respect to the fixed wall portion C. In a preferred embodiment, the sealing body S is made of a rubber material, and is made of, for example, chloroprene rubber (CR) which is excellent in weather resistance, ozone resistance, heat resistance, cold resistance, and the like and suitable for outdoor use.

As illustrated in the plan view with the partially sectional view and the sectional view of the enlarged main parts in FIG. 9, the sealing body S is a rectangular plate-shaped front sealing plate 10A and side sealing plates 10B and 10C. The support portions E that respectively support the sealing plates 10A, 10B, and 10C include a horizontal support plate H and a vertical support plate G. The horizontal support plate H is parallel to a bottom surface of the movable upper wall portion 5, and the sealing plates 10A, 10B, and 10C are supported between the horizontal support plate H and the movable upper wall portion 5. The vertical support plate G is positioned on an opposite side of the fixed wall portion C with respect to the sealing plates 10A, 10B, and 10C, and the vertical support plate G has a through-hole K toward end faces of the sealing plates 10A, 10B, and 10C. A pressure of the washing liquid W in the operating chamber A acts on the sealing plates 10A, 10B, and 10C from the through-hole K provided in the vertical support plate G.

As illustrated in the sectional view of the enlarged main parts in FIG. 9, the front sealing plate 10A moves forward and backward with respect to the front wall 6 that is the fixed wall portion C, the side sealing plate 10B moves forward and backward with respect to the side wall 8 that is the fixed wall portion C, and the side sealing plate 10C moves forward and backward with respect to the side wall 9 that is the fixed wall portion C.

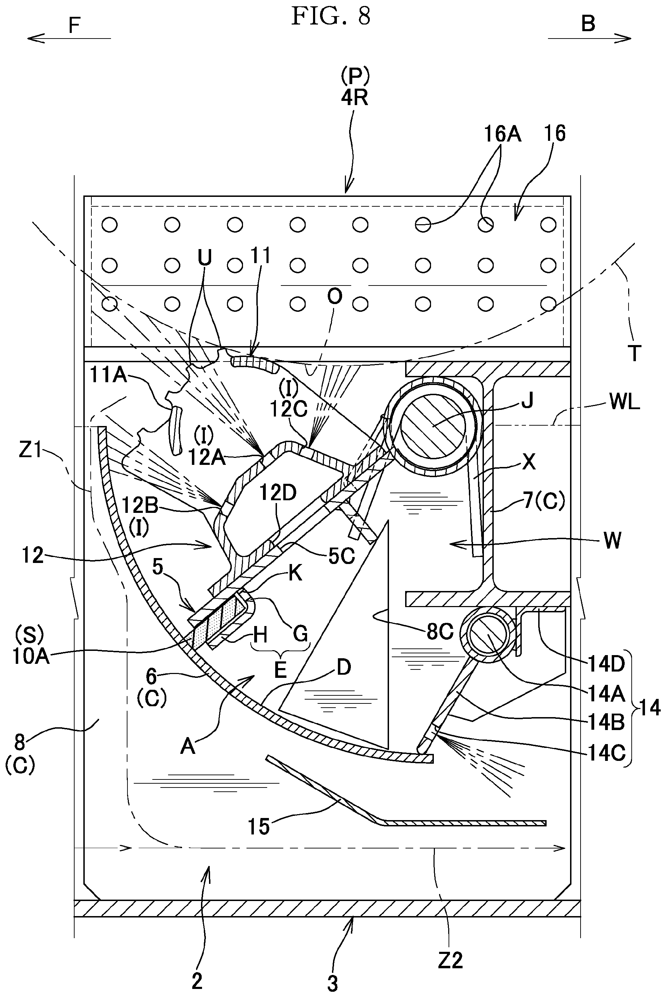

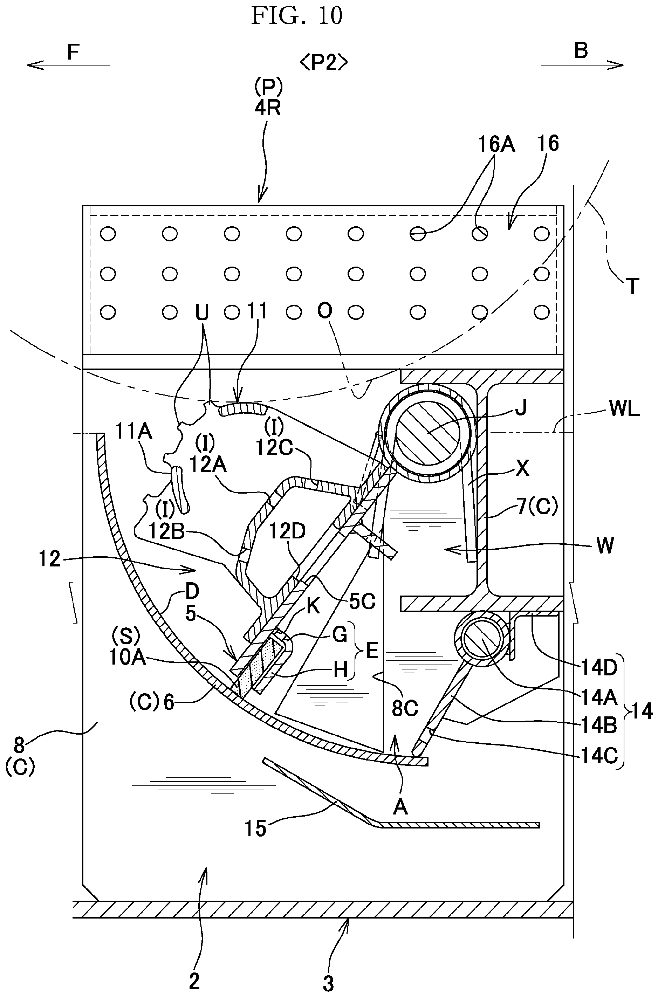

The sealing body S advances toward the fixed wall portion C and slides on the wall surface D of the fixed wall portion C by a pressurizing force (positive pressure) of the washing liquid W in the operating chamber A from the initial posture P1 illustrated in the longitudinal sectional right side view of the enlarged main parts in FIG. 6 to an injection completion posture P2 illustrated in the longitudinal sectional right side view of the enlarged main parts in FIG. 10 via the longitudinal sectional right side views of the enlarged main parts in FIGS. 7 and 8, i.e., when the movable upper wall portion 5 swings downward to decrease a volume of the operating chamber A.

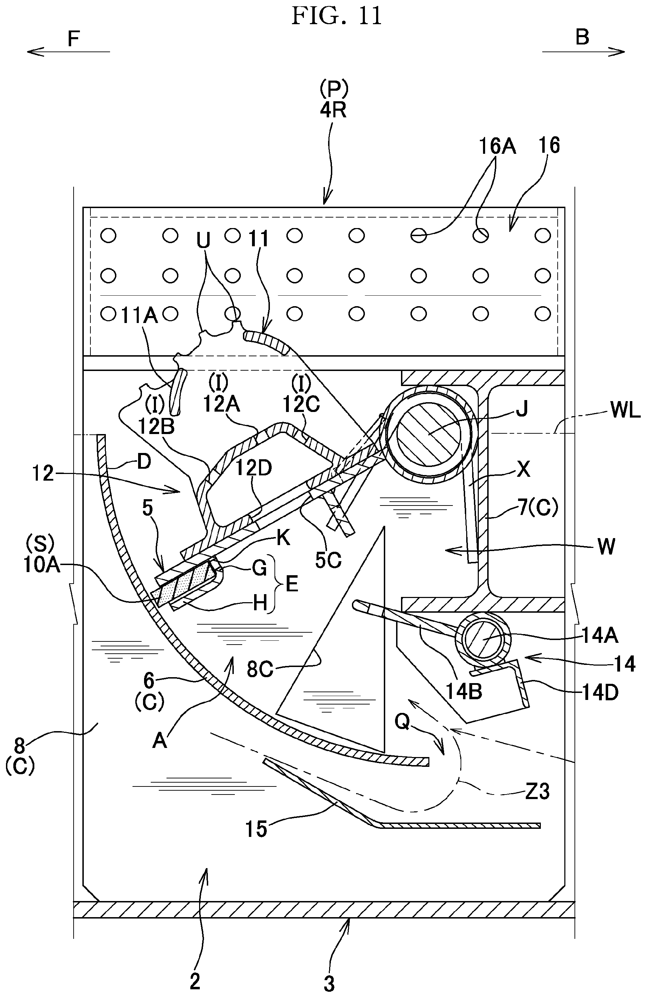

The sealing body S moves and backward to be separated from the wall surface D of the fixed wall portion C by a negative pressure of the washing liquid W in the operating chamber A from the injection completion posture P2 illustrated in the longitudinal sectional right side view of the enlarged main parts in FIG. 10 to the initial posture P1 illustrated in the longitudinal sectional right side view of the enlarged main parts in FIG. 11 via the longitudinal sectional right side view of the enlarged main parts in FIG. 6, i.e., when the movable upper wall portion 5 swings upward to increase the volume of the operating chamber A.

Even though a distal end portion of the sealing body S is worn out due to long-term use, the sealing body S certainly advances toward the fixed wall portion C by the pressurizing force of the washing liquid W in the operating chamber A to come into contact with the wall surface D of the fixed wall portion C when the washing liquid W in the operating chamber A is pressurized. Such a contact state is maintained, and the distal end portion of the sealing body S slides on the fixed wall portion C under the contact state. Accordingly, even though the sealing body is used for a long period of time, a sealing function of the sealing body S does not deteriorate, and leakage of the washing liquid W from between the distal end portion of the sealing body S and the wall surface D of the fixed wall portion C can be prevented. As a result, deterioration in washing ability can be prevented over a long period of time.

When the movable upper wall portion 5 swings upward to increase the volume of the operating chamber A, the sealing body S moves backward to be separated from the wall surface D of the fixed wall portion C by the negative pressure of the washing liquid W in the operating chamber A. Accordingly, when the movable upper wall portion 5 swings upward, the sealing body S is not worn. Furthermore, when the movable upper wall portion 5 swings upward to increase the volume of the operating chamber A, the washing liquid W also flows into the operating chamber A from a gap formed between the wall surface D of the fixed wall portion C and the sealing body S. Accordingly, a time for filling the operating chamber A with the washing water W is shortened.

Furthermore, the support portion E includes the horizontal support plate H and the vertical support plate G, and the through-hole K communicatively connected with the operating chamber A that accommodates the washing liquid W is provided in the vertical support plate G, for causing the pressure of the washing liquid W in the operating chamber A to act on the rectangular plate-shaped sealing plates 10A, 10B, and 10C. Accordingly, a structure for causing the sealing plates 10A, 10B, and 10C to move forward and backward with respect to the fixed wall portion C is simplified.

### (Tire Riding Body)

As illustrated in the perspective view of FIG. 4 and the longitudinal sectional right side views of the enlarged main parts of FIGS. 7, 8, and 10, the pump means P is positioned above the movable upper wall portion 5 and has a tire riding body 11 that swings integrally with the movable upper wall portion 5. In the initial posture P1 illustrated in FIG. 6, the tire riding body 11 has a substantially arc-shaped upper surface 11A protruding upward as viewed in the left-right direction, and has a protrusion portion U having a function of preventing the tire T of the vehicle from slipping.

FIGS. 7, 8, and 10 illustrate a case where the vehicle advances to the front side of the tire washing device 1 (direction of the arrow F) with respect to the tire washing device 1. That is, the tire T of the vehicle advances while rotating forward in the direction of the arrow F. As illustrated in FIGS. 7, 8, and 10, when the tire T moves forward (in the direction of the arrow F) and the tire T of the vehicle rides on the tire riding body 11, the movable upper wall portion 5 swings downward.

### (Washing liquid Injection Body)

As illustrated in the perspective view of FIG. 4 and the longitudinal sectional right side views of the enlarged main parts of FIGS. 7 and 8, the pump means P includes a washing liquid injection body 12 that is positioned above the movable upper wall portion 5 and swings integrally with the movable upper wall portion 5. The washing liquid injection body 12 is positioned below the tire riding body 11, has a through-hole 12D communicatively connected with the operating chamber A via a through-hole 5C (see also the exploded perspective view of FIG. 5) of the movable upper wall portion 5, and has an injection hole I. The injection hole I is separated from an outer peripheral surface O of the tire T riding on the tire riding body 11 by 30 mm or more in a radial direction of the tire T.

As illustrated in FIGS. 7 and 8, when the tire T rides on the tire riding body 11 and the movable upper wall portion 5 swings downward to decrease the volume of the operating chamber A, the washing liquid W in the operating chamber A is pressurized. As a result, the washing liquid W is injected from the injection hole I toward the outer peripheral surface O of the tire T, thereby washing the outer peripheral surface O of the tire T. The mud and the like removed from the tire T flow down to a lower portion of the washing tank 2 as indicated by an arrow Z1.

As the tire T of the vehicle advances while rotating forward in the direction of the arrow F, the movable upper wall portion 5, the tire riding body 11, and the washing liquid injection body 12 swing from the initial posture P1 of FIG. 6 to the injection completion posture P2 of FIG. 10 through the postures of FIGS. 7 and 8. In addition, the injection hole I is at a position separated by 30 mm or more in the radial direction of the tire T from the outer peripheral surface O of the tire T riding on the tire riding body 11. Accordingly, a washing treatment range of the outer peripheral surface O of the tire T, which can be washed with the washing liquid W injected from the injection hole I, is increased, thereby improving the washing ability.

A distance by which the injection hole I is separated from the outer peripheral surface O of the tire T in the radial direction of the tire T is more preferably 40 mm or more, still more preferably 50 mm or more in order to further increase the washing treatment range of the outer peripheral surface O of the tire T.

The injection hole I of the washing liquid injection body 12 has an upper injection hole 12A in a substantially vertical direction, a front inclined injection hole 12B at an angle forward from the vertical direction, and a rear inclined injection hole 12C at an angle rearward from the vertical direction in a plane including the front-rear direction and the up-down direction in the initial posture P1 illustrated in FIG. 6. Accordingly, the washing treatment range of the outer peripheral surface O of the tire T, which can be washed with the washing liquid W injected from the injection holes 12A, 12B, and 12C, is further increased, thereby further improving the washing ability.

### (Side Washing Liquid Injection Body)

As illustrated in the perspective view in FIG. 4, the exploded perspective view in FIG. 5, and the schematic front view with a longitudinal sectional view in FIG. 12, the pump means P includes side washing liquid injection bodies 16 and 17 on a right end portion and a left end portion, respectively. The side washing liquid injection body 16 has injection holes 16A, and the side washing liquid injection body 17 has injection holes 17A.

An internal space of the side washing liquid injection body 16 is closed by a cover body 18. Such an internal space is communicatively connected with the operating chamber A via the through-hole 8C of the side wall 8. In addition, an internal space of the side washing liquid injection body 17 is closed by a cover body 19. Such an internal space is communicatively connected with the operating chamber A via the through-hole 9C of the side wall 9. With this configuration, when the washing liquid W in the operating chamber A is pressurized, the washing liquid W enters the side washing liquid injection bodies 16 and 17 as indicated by shaded thick arrows in FIG. 12 and the washing liquid W is injected from the injection holes 16A and 17A toward a side surface of the tire T, and thus the side surface of the tire T is washed. The mud and the like removed from the tire T flow down to the lower portion of the washing tank 2 as indicated by an arrow Z1 in FIGS. 7 and 8.

### (Check Valve)

As illustrated in the exploded perspective view in FIG. 5 and the longitudinal sectional right side views of the enlarged main parts in FIGS. 6 to 8 and FIGS. 10 and 11, the pump means P includes the check valve 14 positioned below the operating chamber A. As illustrated in FIG. 5, a shaft portion 14A of the check valve 14 is fixed to the side walls 8 and 9 in a state where both end portions of the shaft portion 14A are respectively inserted into the through-hole 8B of the side wall 8 and the through-hole 9B of the side wall 9. The check valve 14 includes a valve body 14B that swings about the shaft portion 14A and a stopper 14D, and is swingable between, for example, a lowermost position illustrated in FIG. 6 and an uppermost position illustrated in FIG. 11.

When the movable upper wall portion 5 swings downward to decrease the volume of the operating chamber A from the initial posture P1 of the movable upper wall portion 5 in FIG. 6 to the injection completion posture P2 of the movable upper wall portion 5 in FIG. 10, the check valve 14 is pressed by the pressurizing force (positive pressure) of the washing liquid W in the operating chamber A and is positioned at the lowermost position. As a result, the outflow of the washing liquid W from the operating chamber A to the washing tank 2 is prevented.

In addition, the washing liquid W is ejected obliquely downward and rearward from a hole portion 14C of the check valve 14 illustrated in FIGS. 5, 7, and 8 by the pressurizing force (positive pressure) of the washing liquid W in the operating chamber A when the volume of the operating chamber A decreases. As a result, the mud and the like accumulated in the washing tank 2 are sent, as sludge water, rearward on a lower side of a sludge water separation plate 15 as indicated by an arrow Z2, and are collected in a sludge discharge unit M illustrated in FIG. 2. The mud and the like collected in the sludge discharge unit M are discharged by a sludge discharge conveyor N, a part of which is illustrated in FIG. 2. The sludge discharge conveyor N may be omitted.

When the movable upper wall portion 5 swings upward from the injection completion posture P2 of the movable upper wall portion 5 of FIG. 10 to increase the volume of the operating chamber A as illustrated in FIG. 11, the valve body 14B of the check valve 14 swings to the uppermost position as illustrated in FIG. 11 due to the negative pressure of the washing liquid W in the operating chamber A and a weight balance of the check valve 14. As a result, the washing liquid W above the sludge water separation plate 15 flows from the washing tank 2 into the operating chamber A through an introduction hole Q as indicated by an arrow Z3.

### (Projection Portion)

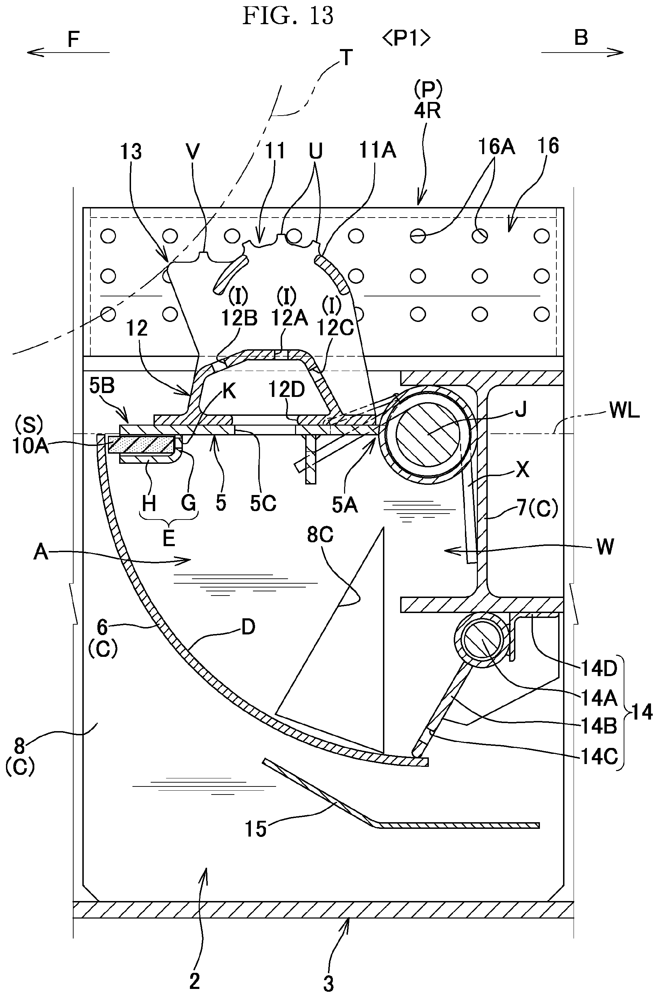

In the initial posture P1 illustrated in the longitudinal sectional right side views of the enlarged main parts in FIGS. 6 and 13, the pump means P has a projection portion 13 that protrudes in a substantially horizontal direction and is provided on a front side of the substantially arc-shaped upper surface 11A protruding above the tire riding body 11, that is, a surface of the movable upper wall portion 5 on the free end portion 5B side. An upper surface of the projection portion 13 is substantially horizontal in the initial posture P1 and has a protrusion portion V having a function of preventing the tire T of the vehicle from slipping.

The projection portion 13 functions at a time when the vehicle advances to the rear side of the tire washing device 1 (in the direction of the arrow B) with respect to the tire washing device 1. That is, as illustrated in FIG. 13, when the vehicle moves rearward (in the direction of the arrow B), the tire T of the vehicle rides on the upper surface of the projection portion 13 before riding on the tire riding body 11, and causes the movable upper wall portion 5 to swing downward about the spindle J in the left-right direction.

When the vehicle approaches the tire riding body 11 from a floating portion 5B side of the movable upper wall portion 5 and moves rearward (in the direction of the arrow B) as illustrated in FIG. 13, the tire T abuts on a top portion of the tire riding body 11 and causes the movable upper wall portion 5 to swing downward without the projection portion 13. In this case, a very large lateral load acts in a direction in which the spindle J in the left-right direction is pressed.

The lateral load acting on the spindle J increases as an elevation angle of a position where the tire T abuts as viewed in the spindle J increases. The elevation angle of the position where the tire T abuts as viewed in the spindle J can be greatly reduced by providing the projection portion 13 on the surface of the movable upper wall portion 5 on the free end portion 5B side, thereby greatly reducing the lateral load acting on the spindle J. As a result, the vehicle can pass through the tire washing device 1 while advancing forward in both directions (reciprocating direction) of a direction (direction of the arrow F) in which the vehicle approaches the tire riding body 11 from a side having no projection portion 13 with respect to the tire riding body 11 and a direction (direction of the arrow B) in which the vehicle approaches the tire riding body 11 from a side having the projection portion 13 with respect to the tire riding body 11. Accordingly, the tire washing device 1 can also be used as a passage, thereby installing and utilizing the tire washing device 1 in a place with a narrow entrance, such as a passage from a road to a construction site, as described above.

The description of the above embodiment is entirely illustrative, and the present disclosure is not limited thereto. A variety of improvements and alterations can be made without departing from the scope of the present invention.

### REFERENCE SIGNS LIST

- 1: tire washing device (vehicle deposit removal device)
- 2: washing tank
- 3: body frame
- 3a: screw hole
- 4L: left pump unit
- 4R: right pump unit
- 4a: attachment hole
- 5: movable upper wall portion
- 5A: base end portion
- 5B: free end portion
- 5C: through-hole
- 6: front wall
- 7: rear wall
- 8, 9: side wall
- 8A, 8B, 8C, 9A, 9B, 9C: through-hole
- 10A: front sealing plate
- 10B, 10C: side sealing plate
- 11: tire riding body
- 11A: upper surface
- 12: washing liquid injection body
- 12A: upper injection hole
- 12B: front inclined injection hole
- 12C: rear inclined injection hole
- 12D: through-hole
- 13: projection portion
- 14: check valve
- 14A: shaft portion
- 14B: valve body
- 14C: hole portion
- 14D: stopper
- 15: sludge water separation plate
- 16, 17: side washing liquid injection body
- 16A, 17A: injection hole
- 18, 19: cover body
- 20: bolt
- A: operating chamber
- B: rear
- C: fixed wall portion
- D: wall surface
- E: support portion
- F: front
- G: vertical support plate
- GL: ground
- H: horizontal support plate
- I: injection hole
- J: spindle
- K: through-hole
- L: left
- M: mud discharge unit
- N: mud discharge conveyor
- O: outer peripheral surface
- P: pump means
- P1: initial posture
- P2: injection completion posture
- Q: introduction hole
- R: right
- S: sealing body
- T: tire
- U, V: protrusion portion
- W: washing liquid
- WL: liquid level
- X: torsion coil spring (return spring)

## Claims

1. A vehicle deposit removal device comprising:
a positive displacement pump means operated by a weight of a vehicle,
wherein
the pump means includes an operating chamber that accommodates a washing liquid,
the operating chamber includes a movable upper wall portion that has a base end portion and a free end portion,
the base end portion is supported by a spindle in a left-right direction,
the free end portion swings in an up-down direction as the vehicle passes,
the pump means includes a sealing body between a fixed wall portion defining the operating chamber and the movable upper wall portion,
the sealing body is supported by a support portion provided on the movable upper wall portion to be movable forward or backward with respect to the fixed wall portion,
the movable upper wall portion moves forward to the fixed wall portion and slides on a wall surface of the fixed wall portion by a pressurizing force of the washing liquid in the operating chamber at a time when the movable upper wall portion swings downward to decrease a volume of the operating chamber, and
the movable upper wall portion moves backward to be separated from the wall surface by a negative pressure of the washing liquid in the operating chamber at a time when the movable upper wall portion swings upward to increase the volume of the operating chamber.

2. The vehicle deposit removal device according to claim 1, wherein
the sealing body is a sealing plate having a rectangular plate shape,
the support portion includes
a horizontal support plate parallel to a bottom surface of the movable upper wall portion, the horizontal support plate supporting the sealing plate between the horizontal support plate and the movable upper wall portion, and
a vertical support plate positioned on an opposite side of the fixed wall portion with respect to the sealing plate, and
the vertical support plate has a through-hole extending toward an end face of the sealing plate.

3. The vehicle deposit removal device according to claim 1 or 2, wherein
the movable upper wall portion swings about the spindle between an initial posture in which the movable upper wall portion is substantially horizontal and an injection completion posture in which the free end portion swings most downward,
a tire riding body and a washing liquid injection body, which are positioned above the movable upper wall portion and swing integrally with the movable upper wall portion, are provided,
the tire riding body causes the movable upper wall portion to swing downward by a tire of the vehicle riding on the tire riding body, and
the washing liquid injection body has a through-hole communicatively connected with the operating chamber, and an injection hole at a position separated by 30 mm or more in a radial direction of the tire from an outer peripheral surface of the tire riding on the tire riding body.

4. The vehicle deposit removal device according to claim 3, wherein
the washing liquid injection body has, in the initial posture, an upper injection hole in a substantially vertical direction, a front inclined injection hole angled forward from the vertical direction, and a rear inclined injection hole angled rearward from the vertical direction, the upper injection hole, the front inclined injection hole, and the rear inclined injection hole being in a plane including the front-rear direction and the up-down direction.

5. The vehicle deposit removal device according to claim 3, wherein
the tire riding body has a substantially arc-shaped upper surface that protrudes upward as viewed in the left-right direction in the initial posture, and a projection portion that protrudes in a substantially horizontal direction, on a surface of the upper surface in a side close to a free end portion of the movable upper wall portion,
the vehicle passes through the pump means from both front and rear directions, and
when the vehicle passes in a direction approaching the tire riding body from a side thereof where the projection portion is provided, the tire of the vehicle rides on an upper surface of the projection portion and causes the movable upper wall portion to swing downward before riding on the tire riding body.
